# EUROPÄISCHE PATENTSCHRIFT

(11) **EP 0 951 355 B1**
(45) Veröffentlichungstag und Bekanntmachung des Hinweises auf die Patenterteilung: **15.12.2004**
(21) Anmeldenummer: 98948988.5
(22) Anmeldetag: 18.09.1998
(51) Int. Cl.: B01J 35/06, B01D 53/22, B01D 71/02

(54) **VERFAHREN ZUR HERSTELLUNG EINES KATALYTISCH AKTIVEN, STOFFDURCHLÄSSIGEN VERBUNDWERKSTOFFES**
METHOD FOR PRODUCING CATALYTICALLY ACTIVE PERMEABLE COMPOSITE MATERIAL
PROCEDE DE FABRICATION D'UN MATERIAU COMPOSITE PERMEABLE A LA MATIERE ET A ACTION CATALYTIQUE

(30) Priorität: 20.09.1997 DE 19741498; 18.03.1998 DE 19811708; 19.03.1998 DE 19812035; 08.05.1998 DE 19820580; 03.06.1998 DE 19824666
(43) Veröffentlichungstag der Anmeldung: 27.10.1999
(73) Patentinhaber: Creavis Gesellschaft für Technologie und Innovation mbH, 45772 Marl (DE)
(72) Erfinder: PENTH, Bernd, D-66822 Lebach (DE); HYING, Christian, D-46414 Rhede (DE); DUDA, Mark, D-45770 Marl (DE); HÖRPEL, Gerhard, D-48301 Nottuln (DE); KÜHNLE, Adolf, D-45770 Marl (DE)
(86) Internationale Anmeldenummer: PCT/EP1998/005938
(87) Internationale Veröffentlichungsnummer: WO 1999/015272

(56) Entgegenhaltungen:
- EP-A- 0 778 076
- WO-A-96/00198
- US-A- 4 175 018
- US-A- 4 923 608
- US-A- 5 076 926
- US-A- 5 120 339
- US-A- 5 376 442
- 'RÖMPP CHEMIE LEXIKON', 1991, THIEME, STUTTGART
- 'HANDBOOK OF HETEROGENEOUS CATALYSIS', 1997, VCH, WEINHEIM
- 'KIRK OTHMER ENCYCLOPEDIA OF CHEMICAL TECHNOLOGY', 1979, WILEY, NY

## Beschreibung

Beansprucht wird ein Verfahren zur Herstellung eines katalytisch aktiven, stoffdurchlässigen Verbundwerkstoffes.

Es ist sind verschiedene Anwendungen bekannt, bei denen Verbundwerkstoffe die Keramiken aufweisen, verwendet werden.

Der Vorteil der Keramik aufweisenden Verbundwerkstoffe liegt darin, daß die keramischen Beschichtungen gegenüber den meisten chemischen Substanzen, wie z.B. organischen Substanzen chemisch inert sind und zudem überwiegend gegenüber Säuren oder Laugen beständig sind. Aus diesem Grund werden Metalle oft mit Keramiken beschichtet, um daß Metall vor chemischen Einflüssen zu schützen. Durch die poröse Oberfläche eines mit einer Keramik beschichteten Verbundwerkstoffes erhöht sich zudem die Abriebsfestigkeit von nachträglich aufgebrachten Lacken oder Schutzüberzügen. Keramiken selbst eignen sich aufgrund ihrer porösen Oberfläche außerdem sehr gut für den Einsatz als Membranen oder Filter.

Der Nachteil der Keramiken bzw. der Keramiken aufweisenden Verbundwerkstoffe ist die Sprödheit der Keramik. Mit Keramik beschichtete Metalle sind deshalb sehr stoßempfindlich und die Keramikbeschichtung übersteht kaum eine mechanische Beanspruchung ohne daß die Oberfläche der Keramik verletzt wird. Da auch das Biegen eines solchen keramischen Verbundwerkstoffes zur Verletzung der Keramikschicht führt, sind die Anwendungsgebiete solcher keramischer Verbundwerkstoffe zur Zeit noch begrenzt.

Keramische Verbundwerkstoffe werden trotz der Nachteile häufig auch in der Filtrationstechnik oder Membrantechnik eingesetzt.

In EP 0358 338 wird ein Verfahren beschrieben, mit welchem durch Aufbringen einer ein Metalloxidsol aufweisenden wäßrigen Lösung und Verfestigen dieser Lösung auf einer Oberfläche, vorzugsweise einer glatten Metalloberfläche, diese Oberfläche durch eine Keramikschicht geschützt werden kann. Der wäßrigen Lösung kann zur Verbesserung der Haftung der keramischen Schicht auf der zu schützenden Oberfläche ein Metalloxidpulver und/oder ein Haftverbesserer zugesetzt werden. Das Verfahren beschreibt nicht das Aufbringen von Schichten auf stoffdurchlässige Trägermaterialien.

WO 96/00198 lehrt die Herstellung keramischer Schichten auf Oberflächen von diversen Materialien. Diese beschichteten Materialien können als Membranen zur Mikrofiltration eingesetzt werden. Bei diesem Verfahren wird Titandioxidsol mit Aluminiumoxidpulver dispergiert, wobei Salzsäure zur Peptisierung verwendet wird.

US 4934139 lehrt ein Verfahren zur Herstellung keramischer Membranen für die Ultrafiltration und Mikrofiltration. Zur Herstellung solcher keramischer Membranen wird ein Sol oder eine Partikelsuspension auf einen porösen Metallträger gebracht und gesintert. Der poröse Träger kann Edelstahl-Sintermetall oder Edelstahlgewebe sein, in dessen Zwischenräume Metallpartikel eingesintert wurden. Metallgewebe mit Zwischenräumen über 100 µm lassen sich ohne Einsintern von Metallpartikeln nach diesem Verfahren nicht herstellen. Das Verfahren vermeidet, daß die Suspension oder das Sol in die Zwischenräume des Trägermaterials eindringen.

In US 5376442 und US 5605628 wird zur Überbrückung von Zwischenräumen im Trägermaterial ein organischer Binder in die Beschichtungslösung eingearbeitet. Dieser Binder muß beim Verfestigen wieder entfernt werden, was zu Unregelmäßigkeiten in der Keramikoberfläche und/oder -struktur führen kann.

Mit den vorgenannten Verfahren ist es nicht möglich, Keramik enthaltende Verbundwerkstoffe herzustellen, die auf und in dem Trägermaterial Keramik aufweisen und die katalytisch aktiv sind, ohne daß die keramische Schicht bei der Herstellung Schaden nimmt.

Der vorliegenden Erfindung liegt daher die Aufgabe zugrunde, ein einfaches und wirtschaftliches Verfahren zur Herstellung eines katalytisch aktiven Verbundwerkstoffes zu finden, der auf und in dem Träger keramische Bestandteile aufweist.

Überraschenderweise wurde gefunden, daß ein katalytisch aktiver, stoffdurchlässiger Verbundwerkstoff auf Basis zumindest eines stoffdurchlässigen Trägers, der auf zumindest einer Seite des Trägers und im Inneren des Trägers zumindest eine anorganische Komponente aufweist, die im wesentlichen zumindest eine Verbindung zumindest eines der Elemente Ti, Zr, Aℓ, Ce oder Si mit Sauerstoff aufweist, wobei eine katalytisch aktive Komponente ein Metall, ausgewählt aus Pt, Rh, Ru, Ir, Cu, Ni, Co oder Pd ist, einfach und kostengünstig hergestellt werden kann.

Gegenstand der vorliegenden Erfindung ist ein Verfahren zur Herstellung eines katalytisch aktiven, stoffdurchlässigen Verbundwerkstoffes auf Basis zumindest eines stoffdurchlässigen Trägers, der ein Material, ausgewählt aus den Metallen, Legierungen, Keramiken oder Verbundstoffen ist, der auf zumindest einer Seite des Trägers und im Inneren des Trägers zumindest eine anorganische Komponente aufweist, die im wesentlichen zumindest eine Verbindung zumindest eines der Elemente Ti, Zr, Al, Ce oder Si mit Sauerstoff aufweist, wobei eine katalytisch aktive Komponente ein Metall, ausgewählt aus Pt, Rh, Ru, Ir, Cu, Ni, Co oder Pd ist, und der durch Aufbringen einer Suspension, die zumindest eine, eine Verbindung zumindest eines der Elemente Ti, Zr, Al, Ce oder Si mit Sauerstoff aufweisende, anorganische Komponente und ein Sol aufweist, erhalten wird, bei dem auf zumindest einen stoffdurchlässigen Träger zumindest eines Suspension gebracht wird, die zumindest eine anorganische Komponente aus zumindest einer Verbindung eines der Elemente Ti, Zr, Al, Ce oder Si mit Sauerstoff suspendiert in einem Sol aufweist und durch zumindest einmaliges Erwärmen auf eine Temperatur von 100 bis 800 °C für 1 Sekunde bis 10 Minuten, die Suspension auf und im Träger verfestigt wird, , welches dadurch gekennzeichnet ist, daß der Träger von einer Rolle abgerollt wird, mit einer Geschwindigkeit von 1 m/h bis 1 m/s zumindest eine Apparatur, welche die Suspension auf und in den träger bringt und zumindest eine weitere Apparatur, welche das Verfestigen der Suspension auf und in dem Träger durch Erwärmen ermöglicht, durchläuf und der so hergestellte Verbundwerkstoff auf einer zweiten Rolle aufgerollt wird und dass eine zu reduzierende Metallverbindung, ausgewählt aus den Nitraten, Halogeniden, Hydroxiden, Cyaniden, Thiocyaniden oder Alkoholaten der Metalle Pt, Rh, Ru, Ir, Cu, Ni, Co oder Pd während der Herstellung des Verbundwerkstoffes zur Suspension gegeben wird und die im und/oder auf dem Verbundwerkstoff vorhandenen Metallverbindung reduziert wird, und wobei die anorganische Komponente, die in dem Sol suspendiert wird, eine Korngröße von 1 bis 10000 nm aufweist und der Verbundwerkstoff eine Dicke von 5 bis 150 µm aufweist.

Unter stoffdurchlässigen Verbundwerkstoffen bzw. Trägern werden Materialien verstanden, die durchlässig sind für Stoffe mit einer Teilchengröße von 0,5 nm bis 500 µm, je nach Ausführungsform des Verbundwerkstoffes bzw. Trägers. Die Stoffe können gasförmig, flüssig oder fest oder in einer Mischform dieser Aggregatzustände vorliegen.

Der Verbundwerkstoff hat den Vorteil, daß auf und in einem durchbrochenen und stoff durchlässigen Träger anorganische Komponenten verfestigt werden können, die diesen Verbundwerkstoff stoffdurchlässig und katalytisch aktiv machen, ohne daß die Beschichtung bei der Herstellung Schaden nimmt.

Der Verbundwerkstoff hat außerdem den Vorteil, daß er sich, obwohl er zum Teil aus Keramik besteht, auf einen Radius von bis zu 1 mm biegen läßt. Diese Eigenschaft ermöglicht eine besonders einfaches Verfahren zur Herstellung dieses Verbundwerkstoffes, da der durch Beschichten mit einer Keramik entstandene Verbundwerkstoff auf einer Rolle auf- oder abgewickelt werden kann. Ferner ermöglicht diese Eigenschaft eine Anpassbarkeit des erfindungsgemäßen Verbundwerkstoffes bei der Verwendung als Membran an verschiedenartige Modulformen, wie z.B. Spiralwickelmodule, Flachmodule oder Taschenmodule.

Das erfindungsgemäße Verfahren zur Herstellung des Verbundwerkstoffes hat den Vorteil, daß Träger mit durchbrochener Oberfläche beschichtet werden können, die eine maximale Größe der Zwischenräume von 500 µm aufweisen. Durch die besonderen schonenden Bedingungen bei der Verfestigung der Suspension in oder auf dem Träger ist es möglich auch Trägermaterialien zu verwenden, die keinen hohen Temperaturen oder nur sehr kurz hohen Temperaturen ausgesetzt werden können.

Der nach dem erfindungsgemäßen Verfahren hergestellte katalytisch aktive Verbundwerkstoff eignet sich hervorragend zur Verwendung als Filter, Katalysator oder Membran. Durch die Möglichkeit auch Träger verwenden zu können, die Zwischenräume bis zu einer Größe von 500 µm aufweisen können, kann äußerst preisgünstiges Material verwendet werden. Über die verwendete Teilchengröße in Kombination mit der Größe der Zwischenräume des verwendeten Trägermaterials läßt sich die Porengröße und/oder Porengrößenverteilung in dem Verbundwerkstoff leicht einstellen, so daß spezielle katalytisch aktive Membranen für bestimmte Anwendungen hergestellt werden können. Einige dieser Anwendungen sind ohne den erfindungsgemäßen Verbundwerkstoff nicht durchzuführen.

Der katalytisch aktive, stoffdurchlässige Verbundwerkstoff wird im folgenden beispielhaft beschrieben, ohne daß der Verbundwerkstoff auf diese Ausführungsart beschränkt ist.

Der katalytisch aktive, stoffdurchlässige Verbundwerkstoff weist als Basis zumindest einen durchbrochenen und stoffdurchlässigen Träger auf. Auf zumindest einer Seite des Trägers und im Inneren des Trägers weist der Träger zumindest eine anorganische Komponente auf. Unter dem Inneren eines Trägers werden in der vorliegenden Erfindung Hohlräume oder Poren in einem Träger verstanden.

Der katalytisch aktive, stoffdurchlässige Verbundwerkstoff wird durch Aufbringen einer Suspension, die zumindest eineanorganische Komponente und ein Sol aufweist, auf einen stoffdurchlässigen Träger, und durch zumindest einmaliges Erwärmen, bei welchem die zumindest eine anorganische Komponente aufweisende Suspension auf und im Träger verfestigt wird, erhalten.

Der Verbundwerkstoff kann für Gase, Feststoffe oder Flüssigkeiten durchlässig sein, insbesondere für Teilchen mit einer Größe von 0,5 nm bis 10 µm. Der Verbundwerkstoff weist eine Dicke von 5 bis 150 µm, auf.

Die Zwischenräume können Poren, Maschen, Löcher, Kristallgitterzwischenräume oder Hohlräume sein. Der Träger kann zumindest ein Material, ausgewählt aus Metallen, Legierungen, Keramiken, oder Verbundstoffen sein. Die Träger, welche die vorgenannten Materialien aufweisen können, können durch eine chemische, thermische oder einer mechanischen Behandlungsmethode oder einer Kombination der Behandlungsmethoden modifiziert worden sein. Vorzugsweise weist der Verbundwerkstoff einen Träger, der zumindest ein Metall aufweist auf, der nach zumindest einer mechanischen Verformungstechnik bzw. Behandlungsmethode, wie z.B. Ziehen, Stauchen, Walken, Walzen, Recken oder Schmieden modifiziert wurde. Ganz besonders bevorzugt weist der Verbundwerkstoff zumindest einen Träger, der zumindest verwobene, verklebte, verfilzte oder keramisch gebundene Fasern, oder zumindest gesinterte oder verklebte Formkörper, Kugeln oder Partikel aufweist, auf. In einer weiteren bevorzugten Ausführung kann ein perforierter Träger verwendet werden. Stoffdurchlässige Träger können auch solche sein, die durch Laserbehandlung oder Ionenstrahlbehandlung stoffdurchlässig werden oder gemacht worden sind.

Es kann vorteilhaft sein, wenn der Träger Fasern aus zumindest einem Material, ausgewählt aus Metallen, Legierungen, Keramiken, und Verbundstoffen oder Fasern aus zumindest einer Kombination dieser Materialien, wie z.B. Asbest, Metalldrähte, Stahldrähte, beschichtete Fasern, aufweist. Vorzugsweise werden Träger verwendet, die zumindest verwobene Fasern aus Metall oder Legierungen aufweisen. Als Fasern aus Metall können auch Drähte dienen. Ganz besonders bevorzugt weist der Verbundwerkstoff einen Träger auf, der zumindest ein Gewebe aus Stahl oder Edelstahl, wie z.B. aus Stahldrähten, Stahlfasern, Edelstahldrähten oder Edelstahlfasern durch Weben hergestellte Gewebe, aufweist, welche vorzugsweise eine Maschenweite von 5 bis 500 µm, besonders bevorzugt Maschenweiten von 50 bis 500µm und ganz besonders bevorzugt Maschenweiten von 70 bis 120 µm, aufweisen.

Der Träger des Verbundwerkstoffes kann aber auch zumindest ein Streckmetall mit einer Porengröße von 5 bis 500 µm aufweisen. Der Träger kann aber auch zumindest ein körniges, gesintertes Metall oder ein Metallvlies mit einer Porenweite von 0,1 µm bis 500 µm, vorzugsweise von 3 bis 60 µm, aufweisen.

Der Verbundwerkstoff weist vorzugsweise einen Träger auf, der zumindest Aluminium, Silicium, Cobalt, Mangan, Zink, Vanadium, Molybdän, Indium, Blei, Wismuth, Silber, Gold, Nickel, Kupfer, Eisen, Titan, Platin, Edelstahl, Stahl, Messing, eine Legierung aus diesen Materialien oder ein mit Au, Ag, Pb, Ti, Ni, Cr, Pt, Pd, Rh, Ru und/oder Ti beschichtetes Material aufweist.

Die im Verbundwerkstoff vorhandene anorganische Komponente weist zumindest eine Verbindung zumindest eines der Elemente Ti, Zr, Ce, Al oder Si mit Sauerstoff, wie z.B. TiO₂, Al₂O₃, SiO₂, ZrO₂ auf. Vorzugsweise liegt zumindest eine anorganische Komponente in einer Korngrößenfraktion mit einer Korngröße von 1 bis 250 nm oder mit einer Korngröße von 260 bis 10000 nm vor.

Es kann vorteilhaft sein, wenn der Verbundwerkstoff zumindest zwei Korngrößenfraktionen von zumindest einer anorganischen Komponente aufweist. Das Korngrößenverhältnis der Korngrößenfraktionen im Verbundwerkstoff beträgt von 1:1 bis 1:10000, vorzugsweise von 1:1 bis 1:100. Das Mengenverhältnis der Komgrößenfraktionen im Verbundwerkstoff kann vorzugsweise von 0,01 zu 1 bis 1 zu 0,01 betragen.

Die Stoffdurchlässigkeit des Verbundwerkstoffes kann durch die Korngröße der verwendeten anorganischen Komponente auf Teilchen mit einer bestimmten maximalen Größe begrenzt werden.

Die zumindest eine anorganische Komponente aufweisende Suspension, mit welcher der Verbundwerkstoff erhalten werden kann, kann zumindest eine Flüssigkeit, ausgewählt aus Wasser, Alkohol und Säure oder eine Kombination dieser Flüssigkeiten aufweisen.

Der Verbundwerkstoff weist zumindest eine katalytisch aktive Komponente auf. Der Verbundwerkstoff weist als katalytisch aktive Komponente zumindest ein Metall ausgewählt aus den Metallen Pt, Rh, Ru, Ir, Cu, Ni, Pd und Co, auf.

In einer besonders bevorzugten Ausführungsfbrm des Verbundwerkstoffes kann dieser, ohne Zerstörung der im Inneren des Trägers und auf dem Träger verfestigten anorganischen Komponente, biegbar ausgeführt sein. Vorzugsweise ist der Verbundwerkstoff auf einen kleinsten Radius von bis zu 1 mm biegbar.

Das erfindungsgemäße Verfahren zur Herstellung eines Verbundwerkstoffes wird im folgenden beispielhaft beschrieben, ohne darauf beschränkt zu sein.

Bei dem erfindungsgemäßen Verfahren zur Herstellung eines ein Metall, ausgewählt aus Pt, Rh, Ru, Ir, Cu, Ni, Co oder Pd als katalytisch aktive Komponente aufweisenden Verbundwerkstoffes, der eine Dicke von 5 bis 150 µm aufweist, wird in und/oder auf zumindest einen durchbrochenen und stoffdurchlässigen Träger, zumindest eine Suspension gebracht, die zumindest eine anorganische Komponente eines der Elemente Ti, Zr, Al, Ce oder Si mit Sauerstoff suspendiert in einem Sol aufweist, und durch zumindest einmaliges Erwärmen wird die Suspension auf und im Trägermaterial verfestigt.

Das katalytisch aktive Metall wird dabei durch Reduktion einer Metallverbindung erhalten. Als zu reduzierende Verbindungen werden Metallverbindungen ausgewählt aus den Nitraten, Halogeniden, Hydroxiden, Cyaniden, Thiocyaniden oder Alkoholaten der Metalle Kobalt, Nickel, Kupfer, Ruthenium, Rhodium, Palladium, Iridium oder Platin, oder Mischungen dieser Metalle oder Verbindungen eingesetzt. Diese Verbindungen werden während der Herstellung des Verbundwerkstoffes zur Suspension gegeben.

Es kann vorteilhaft sein, die im und oder auf dem Verbundwerkstoff vorhandene Metallverbindung mit einem Reduktionsmittel, vorzugsweise einem Borhydrid, ganz besonders bevorzugt mit NaBEt₃H, LiBEt₃H, NaBMe₃H oder KBPr₃H, zum Metall zu reduzieren. Vorzugsweise wird der Verbundwerkstoff, der zu reduzierende Metallverbindungen aufweist mit einem organisches Lösungsmittel, welches zumindest eines der Hydroorganoborate enthält, behandelt. Da die entstehenden Salze mit den bororganischen Komplexbildnern in organischer Phase gut lösliche Komplexe bilden, wird der erfindungsgemäße Verbundwerkstoff praktisch borfrei erhalten. Enthält der Verbundwerkstoff mehrere Metallsalze, so können nach der Reduktion Partikel erhalten werden, die echte Legierungen aus zumindest zwei Metallen, wie z.B. Rhodium-Platin-, Eisen-Kobalt-Nickel- oder Palladium-Platin-Legierungen, darstellen.

Bei der Durchführung des erfindungsgemäßen Verfahrens kann es vorteilhaft sein, die Suspension auf und in oder aber auf oder in zumindest einen Träger durch Aufdrucken, Aufpressen, Einpressen Aufrollen, Aufrakeln, Aufstreichen, Tauchen, Spritzen oder Aufgießen zu bringen.

Der stoffdurchlässige Träger kann ein Material, ausgewählt aus Metallen, Legierungen, Keramiken oder Verbundstoffen sein.

Die verwendete Suspension, die zumindest eine anorganische Komponente und zumindest ein Metalloxidsol, zumindest ein Halbmetalloxidsol oder zumindest ein Mischmetalloxidsol oder eine Mischung dieser Sole aufweist, wird durch Suspendieren zumindest einer anorganischen Komponente in zumindest einem dieser Sole hergestellt.

Die Sole werden durch Hydrolisieren zumindest einer Metallverbindung, zumindest einer Halbmetallverbindung oder zumindest einer Mischmetallverbindung mit einer Flüssigkeit, einem Gas oder einem Feststoff erhalten, wobei es vorteilhaft sein kann, wenn als Flüssigkeit zur Hydrolyse der zu hydrolisierenden Verbindung Wasser, Alkohol oder eine Säure oder eine Kombination dieser Flüssigkeiten oder als Feststoff Eis bzw. als Gas Wasserdampf eingesetzt wird. Ebenso kann es vorteilhaft sein, wenn die zu hydrolisierende Verbindung vor der Hydrolyse in zumindest einen Alkohol oder eine zumindest eine Säure oder eine Kombination dieser Flüssigkeiten gegeben wird. Als zu hydrolisierende Verbindung wird vorzugsweise zumindest ein Metallnitrat, ein Metallchlorid, ein Metallcarbonat, eine Metallalkoholatverbindung oder zumindest eine Halbmetallalkoholatverbindung, besonders bevorzugt zumindest eine Metallalkoholatverbindung, ein Metallnitrat, ein Metallchlorid, ein Metallcarbonat oder zumindest eine Halbmetallalkoholatverbindung ausgewählt aus den Verbindungen der Elemente Ti, Zr, Al, Si, und Ce , wie z.B. Titanalkoholate, wie z.B. Titanisopropylat, Siliziumalkoholate, Zirkoniumalkoholate, oder ein Metallnitrat, wie z.B. Zirkoniumnitrat, hydrolisiert.

Es kann vorteilhaft sein, die Hydrolyse der zu hydrolisierenden Verbindungen mit zumindest dem halben Molverhältnis Wasser, Wasserdampf oder Eis, bezogen auf die hydrolisierbare Gruppe, der hydrolisierbaren Verbindung, durchzuführen.

Die hydrolisierte Verbindung kann zum Peptisieren mit zumindest einer organischen oder anorganischen Säure, vorzugsweise mit einer 10 bis 60 %-igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden.

Es können nicht nur Sole verwendet werden, die wie oben beschrieben hergestellt wurden, sondern auch handelsübliche Sole, wie z.B. Titannitratsol, Zirkonnitratsol oder Silicasol.

Die anorganische Komponente die in dem Sol suspendiert wird, weist eine Komgöße von 1 bis 10000 nm auf. Besonders bevorzugt wird zumindest eine anorganische Komponente, die zumindest eine Verbindung ausgewählt aus den Oxiden der Elemente Ti, Zr, Ce, Al und Si, wie z.B. ZrO₂, SiO₂, Al₂O₃ aufweist, suspendiert.

Vorzugsweise beträgt der Massenanteil der suspendierten Komponente das 0,1 bis 500-fache der eingesetzten hydrolisierten Verbindung.

Durch die geeignete Wahl der Korngröße der suspendierten Verbindungen in Abhängigkeit von der Größe der Poren, Löcher oder Zwischenräume des stoffdurchlässigen Trägers, aber auch durch die Schichtdicke des Verbundwerkstoffes sowie das anteilige Verhältnis Sol-Lösungsmittel-Metalloxid läßt sich die Rißfreiheit im Verbundwerkstoff optimieren.

Bei der Verwendung eines Maschengewebes mit einer Maschenweite von z.B. 100 µm können zur Erhöhung der Rißfreiheit vorzugsweise Suspensionen verwendet werden, die eine suspendierte Verbindung mit einer Korngröße von mindestens 0,7 µm aufweist. Im allgemeinen sollte das Verhältnis Korngröße zu Maschen- bzw. Porengröße von 1:1000 bis 50:1000 betragen. Die Suspension aus Sol und zu suspendierenden Verbindungen weist vorzugsweise ein Verhältnis Sol zu zu suspendierenden Verbindungen von 0,1:100 bis 100:0,1, vorzugsweise von 0,1:10 bis 10:0,1 Gewichtsteilen auf.

Erfindungsgemäß wird die auf und im Träger vorhandenen Suspension durch Erwärmen des Verbundes für 1 Sekunde bis 10 Minuten einer Temperatur von 100 bis 800 °C verfestigt.

Das Erwärmen des Verbundes kann mittels erwärmter Luft, Heißluft, Infrarotstrahlung, Mikrowellenstrahlung oder elektrisch erzeugter Wärme, erfolgen. In einer besonderen Ausführungsart des erfindungsgemäßen Verfahrens kann es vorteilhaft sein, wenn das Erwärmen unter Nutzung des Trägermaterials als elektrische Widerstandheizung, erfolgt. Zu diesem Zweck kann über zumindest zwei Kontakte der Träger an eine Stromquelle angeschlossen werden. Je nach Stärke der Stromquelle, Höhe der abgegebenen Spannung und Eigenwiderstand des elektrisch leitenden Trägers, heizt sich dieser bei eingeschaltetem Strom auf und die in und auf dem Träger vorhandene Suspension kann dadurch verfestigt werden.

In einer weiteren bevorzugten Ausführungsart des erfindungsgemäßen Verfahrens kann das Verfestigen der Suspension dadurch erreicht werden, daß die Suspension auf oder in oder aber auf und in einen vorgewärmten Träger gebracht wird und somit direkt nach dem Aufbringen verfestigt wird.

Das erfindungsgemäße Verfahren wird so durchgeführt, daß der Träger von einer Rolle abgerollt wird, mit einer Geschwindigkeit von 1 m/h bis 1 m/s zumindest eine Apparatur, welche die Suspension auf oder in oder auf und in den Träger bringt und zumindest eine weitere Apparatur, welche das zum Verfestigen der Suspension auf und in dem Träger durch Erwärmen ermöglicht, durchläuft und der so hergestellte Verbundwerkstoff auf einer zweiten Rolle aufgerollt wird. Auf diese Weise ist es möglich, den Verbundwerkstoff im Durchlaufverfahren herzustellen.

In einer weiteren besonderen Ausführungsart des erfindungsgemäßen Verfahrens kann es vorteilhaft sein, wenn auf einen Träger, der ein Verbundwerkstoff oder ein nach dem erfindungsgemäßen Verfahren hergestellter Verbundwerkstoff ist, eine keramische oder anorganische Schicht aufgebracht wird.
Durch das erfindungsgemäße Aufbringen zumindest einer weiteren anorganischen Schicht oder Keramikschicht erhält man einen Verbundwerkstoff, der einen Porengradienten aufweist. Zudem ist es durch mehrmaliges Aufbringen einer Schicht möglich, zur Herstellung von Verbundwerkstoffen mit einer bestimmten Porengröße auch solche Träger zu verwenden, deren Poren- bzw. Maschenweite zur Herstellung eines Verbundwerkstoffes mit der geforderten Porengröße nicht geeignet ist. Dies kann z.B. der Fall sein, wenn ein Verbundwerkstoff mit einer Porengröße von 0,25 µm unter Verwendung eines Trägers mit einer Maschenweite von über 300 µm hergestellt werden soll. Zum Erhalt eines solchen Verbundwerkstoffes kann es vorteilhaft sein, auf den Träger zuerst zumindest eine Suspension zu bringen, die geeignet ist Träger mit einer Maschenweite von 300 µm zu behandeln, und diese Suspension nach dem Aufbringen zu verfestigen. Der auf diese Weise erhaltene Verbundwerkstoff kann nun als Träger mit einer geringeren Maschen- bzw. Porengröße eingesetzt werden. Auf diesen Träger kann z.B. eine weitere Suspension aufgebracht werden, die z.B. eine Verbindung mit einer Komgröße von 0,5 µm aufweist.

Die Rißunempfindlichkeit bei Verbundwerkstoffen mit großen Maschen- bzw. Porenweiten kann auch dadurch verbessert werden, daß Suspensionen auf den Träger aufgebracht werden, die zumindest zwei suspendierte Verbindungen aufweisen. Vorzugsweise werden zu suspendierende Verbindungen verwendet, die ein Komgrößenverhältnis von 1:1 bis 1:10, besonders bevorzugt von 1:1,5 bis 1:2,5 aufweisen. Der Gewichtsanteil von der Komgößenfraktion mit der kleineren Korngröße sollte einen Anteil von höchstens 50 %, vorzugsweise von 20 % und ganz besonders bevorzugt von 10 %, an dem Gesamtgewicht der eingesetzten Korngrößenfraktionen nicht überschreiten.

Trotz des Aufbringens einer zusätzlichen Keramikschicht bzw. anorganischen Schicht, die katalytisch aktive Komponenten enthalten kann, auf den Träger kann der Verbundwerkstoff biegbar sein.

Der Verbundwerkstoff kann auch dadurch hergestellt werden, daß ein Träger, der z.B. ein Verbundwerkstoff oder ein anderes geeignetes Trägermaterial sein kann, auf einen zweiten Träger, der aus dem selben Material wie der erste Träger oder einem anderen Material oder aus zwei Trägem unterschiedlicher Stoffdurchlässigkeit bzw. Porösität bestehen kann, gelegt wird. Zwischen die beiden Trägermaterialien kann ein Spacer, ein Drainagematerial oder ein anderes zur Ableitung von Stoffen geeignetes Material, z.B. eine Gewebeverbund eingelegt werden. Die Kanten der beiden Träger werden, z.B. durch Löten, Schweißen oder Kleben miteinander verbunden. Das Kleben kann mit handelsüblichen Klebern oder Klebeband erfolgen. Auf einen so vorbereiteten Trägerverbund kann die Suspension auf die oben beschriebenen Weisen aufgebracht werden.

In einer besonders bevorzugten Ausführungsart können die aufeinander gelegten Träger, zwischen denen zumindest ein Spacer, ein Drainagematerial oder ähnliches angeordnet sein kann, vor oder nach, vorzugsweise nach dem Verbinden der Kanten der Träger, aufgerollt werden. Durch verwenden dicker oder dünner Klebebänder zum Verbinden der Kanten der Träger kann der Abstand zweier beim Aufrollen übereinanderliegender Trägerverbunde beeinflußt werden. Auf solche gewickelten Trägerverbunde kann eine wie oben beschriebene Suspension, z.B. durch Tauchen in eine Suspension, aufgebracht werden. Mit Hilfe von Druckluft läßt sich nach dem Tauchen der Trägerverbund von überschüssiger Suspension befreien. Die auf den Trägerverbund aufgebrachte Suspension läßt sich wie oben beschrieben verfestigen. Ein so hergestellter Verbundwerkstoff kann als formselektive Membran in einem Wickelmodul verwendet werden.

In einer weiteren besonderen Ausführungsform des erfindungsgemäßen Verfahrens kann der erwähnte Trägerverbund auch dadurch hergestellt werden, daß jeweils von einer Rolle zwei Träger und wenn vorgesehen zumindest ein Spacer abgerollt werden, und dann übereinander gelegt werden. Das Verbinden der Kanten der Träger kann wiederum durch Löten, Schweißen, Kleben oder durch andere geeignete Verfahren zum Verbinden von flachen Körpern erfolgen. Auf den so hergestellten Trägerverbund kann dann die Suspension aufgebracht werden. Dies kann z.B. dadurch erfolgen, daß der Trägerverbund mit der Suspension besprüht oder bestrichen wird oder daß der Trägerverbund durch eine Wanne geführt wird, in der die Suspension vorhanden ist. Die Aufgebrachte Suspension wird nach einer der vorgenannten Methoden verfestigt. Der so hergestellte Verbundwerkstoff kann auf eine Rolle aufgewickelt werden. Auf einen so beschriebenen Werkstoff kann durch nochmaliges Aufbringen und Verfestigen einer weiteren Suspension einer weiteren anorganische Schicht auf- und/oder eingebracht werden. Durch die Verwendung verschiedener Suspensionen lassen sich die Materialeigenschaften je nach Wunsch bzw. je nach Verwendungszweck einstellen. Es können auf diesen Verbundwerkstoff nicht nur weitere Suspensionen aufgebracht werden, sondern auch ungesinterte keramische und/oder anorganische Schichten, die durch Auflaminieren wie oben beschrieben erhältlich sind. Die beschriebene Ausführungsart des erfindungsgemäßen Verfahrens kann kontinuierlich oder diskontinuierlich, vorzugsweise kontinuierlich betrieben werden. Ein so hergestellter Verbundwerkstoff kann als formselektive Membran in einem Flachmodul verwendet werden.

Der Träger im Verbundwerkstoff kann, je nach verwendetem Trägermaterial, wieder entfernt werden, so daß ein keramischer Werkstoff entsteht, der keinerlei Trägermaterial mehr aufweist. Ist als Trägermaterial ein Metall, wie z.B. Eisen verwendet worden, so kann dieser Träger durch Behandeln des Verbundwerkstoffes mit Säuren, vorzugsweise mit konzentrierter Salzsäure, aus dem Verbundwerkstoff herausgelöst werden.

Es kann vorteilhaft sein, den Verbundwerkstoff als Träger für die Herstellung eines Verbundwerkstoffes zu verwenden.

Es kann vorteilhaft sein, den Verbundwerkstoff als Filter zur Auftrennung von Stoffgemischen einzusetzen. Besonders bevorzugt kann der Verbundwerkstoff als Filter zur Auftrennung von Flüssigkeitsgemischen, Gasgemischen, zumindest eine Flüssigkeit und zumindest ein Gas enthaltenden Gemischen, zumindest einen Feststoff und zumindest eine Flüssigkeit enthaltenden Gemischen und zumindest ein Gas und zumindest einen Feststoff oder zumindest eine Flüssigkeit oder ein Gas enthaltenden Gemischen eingesetzt werden. Der Verbundwerkstoff kann auch als Filter in druckbetriebenen Auftrennprozessen verwendet werden.

Ganz besonders vorteilhaft ist die Verwendung eines Verbundwerkstoffes als Membran zur Mikrofiltration, Ultrafiltration oder Nanofiltration.

Es kann ebenso vorteilhaft sein, einen Verbundwerkstoff in katalytischen Prozessen einzusetzen. Besonders vorteilhaft kann der Verbundwerkstoff als Katalysatorträger, wobei an den Katalysatorträger ein elektrisches Feld angelegt wird und der Katalysatorträger als Anode oder Kathode geschaltet wird, eingesetzt werden. Der Verbundwerkstoff kann auch als Katalysatormembran, wobei die katalytische Wirkung von Sauerstoff-Ionen-Leitende-Festelektrolyten genutzt wird, die sich durch die Sauerstoffionenleitung im elektrischen Feld einstellt, eingesetzt werden.

Der Verbundwerkstoff kann, wenn er zumindest Titandioxid als anorganische Komponente aufweist als katalytisch wirksame Membran oder als Katalysator genutzt werden, wenn durch Anlegen eines elektrischen Feldes eine nicht stöchiometrische Titandioxid-Verbindung gebildet wird.

Durch Schalten des Verbundwerkstoffes als Kathode kann die katalytisch reduktive Wirkung des Verbundwerkstoffes genutzt werden. Durch Schalten des Verbundwerkstoffes als Anode kann die katalytisch oxidative Wirkung des Verbundwerkstoffes genutzt werden.

Besonders bevorzugt wird der Verbundwerkstoff zur katalytischen Veränderung von sauerstoffhaltigen Verbindungen genutzt. So kann der erfindungsgemäße Verbundwerkstoff zur Reduktion von Nitrat- oder Nitrit-Ionen in Abwässern oder z.B. zum Abbau von Ozon zu Sauerstoff genutzt werden.

Ganz besonders bevorzugt kann der Verbundwerkstoff für Oxidationsreaktionen eingesetzt werden. Ebenso ist es möglich organische Verbindungen mit Hilfe des katalytisch aktiven Verbundwerkstoffes zu oxidieren, wie z.B. Aromaten zu Hydroxyaromaten.

Es ist außerdem möglich, den Verbundwerkstoff als Träger zur Herstellung eines Verbundwerkstoffes zu verwenden.

Es kann vorteilhaft sein, bevorzugte Ausführungsarten des erfindungsgemäßen Verfahrens mit zumindest einer weiteren bevorzugten Ausführungsart des erfindungsgemäßen Verfahrens zu kombinieren. Ebenso kann es vorteilhaft sein, bevorzugte Ausführungsarten des Verbundwerkstoffes mit zumindest einer weiteren besonderen Ausführungsart oder -form des Verbundwerkstoffes zu kombinieren.

Das erfindungsgemäße Verfahren zur Herstellung eines katalytisch aktiven Verbundwerkstoffes wird in den folgenden Beispielen beschrieben, ohne darauf beschränkt zu sein.

### Beispiel 1.1:

120 g Titantetraisopropylat wurden mit 140 g entionisiertem Eis unter kräftigem Rühren bis zur Feinstverteilung des entstehenden Niederschlags hydrolisiert. Nach Zugabe von 100 g 25 %-iger Salzsäure wurde bis zum Klarwerden der Phase gerührt. Es wurden 9 g FeCl₃ und 3 g CoCl₂, sowie 280 g α-Aluminiumoxid des Typs CT3000SG der Firma Alcoa, Deutschland zugegeben und mehrere Tage bis zum Auflösen aller Aggregate kräftig gerührt.

Die so hergestellte Suspension wurde flächig auf ein Nickelstreckmetall mit 90 µm Gitterweite in einer Dicke von etwa 30 - 150 µm aufgestrichen und mittels eines Heißluftföns bei 100 - 150 °C während 10 Minuten verfestigt. Dabei entsteht ein Verbundwerkstoff, der eine mechanisch feste keramische Beschichtung aufweist. Der Makroaufbau dieser Keramik besteht aus α-Aluminiumoxid und besitzt eine Porenweite von 0,45 µm. Auf den Oberflächen der Alumiumoxidpartikel befinden sich als Mikroaufbau wenige Mikrometer dünne keramischen Membranen. In deren Gefüge und in den Poren des Makroaufbaus befinden sich die Metallsalze.

Der Verbundwerkstoff wurde in einem Rohr zusammengerollt und in eine Lösung aus 150 ml einer 1,7 molaren Lösung von LiBEt₃H in THF gestellt und 10 Stunden stehengelassen. Der Verbundwerkstoff wurde danach aus der Lösung genommen und erst mit 800 ml THF, dann mit 1500 ml Ethanol und dann mit einer Mischung aus 800 ml Ethanol und 800 ml THF bis zum Ende des Ausgasens gewaschen.

### Beispiel 1.2:

In einem wie in Beispiel 1.1 durchgeführten Versuch wurde statt Nickelstreckmetall ein Gewebe aus Edelstahl (VA-Stahl) verwendet. Damit dieses Gewebe nicht durch Chloridionen zerstört werden konnte, wurden statt der Chloride die Nitrate von Kobalt und Eisen und als Säure 140 g einer 54 %-igen Salpetersäure eingesetzt.

## Patentansprüche

1. Verfahren zur Herstellung eines katalytisch aktiven, stoffdurchlässigen Verbundwerkstoffes auf Basis zumindest eines stoffdurchlässigen Trägers, der ein Material, ausgewählt aus den Metallen, Legierungen, Keramiken oder Verbundstoffen ist, der auf zumindest einer Seite des Trägers und im Inneren des Trägers zumindest eine anorganische Komponente aufweist, die im wesentlichen zumindest eine Verbindung zumindest eines der Elemente Ti, Zr, Al, Ce oder Si mit Sauerstoff aufweist, wobei eine katalytisch aktive Komponente ein Metall, ausgewählt aus Pt, Rh, Ru, Ir, Cu, Ni, Co oder Pd ist, und der durch Aufbringen einer Suspension, die zumindest eine, eine Verbindung zumindest eines der Elemente Ti, Zr, Al, Ce oder Si mit Sauerstoff aufweisende, anorganische Komponente und ein Sol aufweist, erhalten wird, bei dem auf zumindest einen stoffdurchlässigen Träger zumindest eine Suspension gebracht wird, die zumindest eine anorganische Komponente aus zumindest einer Verbindung zumindest eines der Elemente Ti, Zr, Al, Ce oder Si mit Sauerstoff suspendiert in einem Sol aufweist und durch zumindest einmaliges Erwärmen auf eine Temperatur von 100 bis 800°C für 1 Sekunde bis 10 Minuten, die Suspension auf und im Trägermaterial verfestigt wird,
**dadurch gekennzeichnet,**
**dass** der Träger von einer Rolle abgerollt wird, mit einer Geschwindigkeit von 1 m/h bis 1 m/s zumindest eine Apparatur, welche die Suspension auf und in den Träger bringt und zumindest eine weitere Apparatur, welche das Verfestigen der Suspension auf und in dem Träger durch Erwärmen ermöglicht, durchläuft und der so hergestellte Verbundwerkstoff auf einer zweiten Rolle aufgerollt wird und dass eine zu reduzierende Metallverbindung, aufgewählt aus den Nitraten, Halogeniden, Hydroxiden, Cyaniden, Thiocyaniden oder Alkoholaten der Metalle Pt, Rh, Ru, Ir, Cu, Ni, Co, oder Pd während der Herstellung des Verbundwerkstoffes zur Suspension gegeben wird und die im und/oder auf dem Verbundwerkstoff vorhandenen Metallverbindung reduziert wird, und wobei die anorganische Komponente, die in dem Sol suspendiert wird, eine Korngröße von 1 bis 10000 nm aufweist und der Verbundwerkstoff eine Dicke von 5 bis 150 µm aufweist.

2. Verfahren nach Anspruch 1,
**dadurch gekennzeichnet,**
**dass** die Suspension auf und in zumindest einen Träger durch Aufdrucken, Aufpressen, Einpressen, Aufrollen, Aufrakeln, Aufstreichen, Tauchen, Spritzen oder Aufgießen gebracht wird.

3. Verfahren nach zumindest einem der Ansprüche 1 bis 2,
**dadurch gekennzeichnet,**
**dass** die Sole durch Hydrolisieren zumindest einer Metallverbindung, zumindest einer Halbmetallverbindung oder zumindest einer Mischmetallverbindung mit einer Flüssigkeit, einem Gas oder einem Feststoff erhalten werden.

4. Verfahren nach Anspruch 3,
**dadurch gekennzeichnet,**
**dass** als Flüssigkeit, Gas oder Feststoff zur Hydrolyse der Metallverbindung Wasser, Wasserdampf, Eis, Alkohol oder in eine Säure oder eine Kombination dieser Verbindungen eingesetzt wird:

5. Verfahren nach zumindest einem der Ansprüche 3 oder 4, **dadurch gekennzeichnet, dass** die zu hydrolisierende Verbindung vor der Hydrolyse in Alkohol oder einer Säure oder eine Kombination dieser Flüssigkeiten gegeben wird.

6. Verfahren nach zumindest einem der Ansprüche 1 bis 5,
**dadurch gekennzeichnet,**
**dass** die Hydrolyse der zu hydrolisierenden Verbindungen mit zumindest dem halben Molverhältnis Wasser, bezogen auf die hydrolisierbare Gruppe, der hydrolisierbaren Verbindung, durchgeführt wird.

7. Verfahren nach zumindest einem der Ansprüche 1 bis 6,
**dadurch gekennzeichnet,**
**dass** die hydrolisierte Verbindung mit zumindest einer organischen oder anorganischen Säure behandelt wird.

8. Verfahren nach Anspruch 7,
**dadurch gekennzeichnet,**
**dass** die organische oder anorganische Säure eine Konzentration von 10 bis 60 % aufweist.

9. Verfahren nach zumindest einem der Ansprüche 7 oder 8,
**dadurch gekennzeichnet,**
**dass** die hydrolisierte Verbindung mit zumindest einer Mineralsäure, ausgewählt aus Salpetersäure, Schwefelsäure, Perchlorsäure und Salzsäure oder einer Kombination dieser Säuren behandelt wird.

10. Verfahren nach zumindest einem der Ansprüche 1 bis 9,
**dadurch gekennzeichnet,**
**dass** der Massenanteil der suspendierten Komponenten dem 0,1 bis 500-fachen der eingesetzten hydrolisierten Verbindung entspricht.

11. Verfahren nach zumindest einem der Ansprüche 1 bis 10,
**dadurch gekennzeichnet,**
**dass** das Erwärmen mittels erwärmter Luft, Heißluft, Infrarotstrahlung, Mikrowellenstrahlung oder elektrisch erzeugter Wärme, erfolgt.

12. Verfahren nach zumindest einem der Ansprüche 1 bis 11,
**dadurch gekennzeichnet,**
**dass** das Erwärmen unter Nutzung des Trägermaterials als elektrische Widerstandheizung erfolgt.

13. Verfahren nach zumindest einem der Ansprüche 1 bis 12,
**dadurch gekennzeichnet,**
**dass** das Verfestigen der Suspension dadurch erreicht wird, dass die Suspension auf und in einen vorgewärmten Träger gebracht wird.

14. Verfahren nach zumindest einem der Ansprüche 1 bis 13,
**dadurch gekennzeichnet,**
**dass** das Metallsalz, welches im Verbundwerkstoff vorhanden ist, durch die Behandlung des Verbundwerkstoffes mit einem Reduktionsmittel, zum Metall reduziert wird.

15. Verfahren nach Anspruch 14,
**dadurch gekennzeichnet,**
**dass** als Reduktionsmittel ein Borhydrid eingesetzt wird.

## Claims

1. A process for producing a catalytically active, pervious composite based on at least one pervious support, which is a material selected from metals, alloys, ceramics or composites, having on at least one side of the support and in the interior of the support at least one inorganic component essentially comprising at least one compound of at least one of the elements Ti, Zr, Al, Ce and Si with oxygen, one catalytically active component being a metal selected from Pt, Rh, Ru, Ir, Cu, Ni, Co and Pd, obtained by applying a suspension comprising at least one inorganic component, comprising a compound of at least one of the elements Ti, Zr, Al, Ce and Si with oxygen, and a sol, in which process at least one suspension comprising at least one inorganic component comprising at least one compound of at least one of the elements Ti, Zr, Al, Ce and Si with oxygen in suspension in a sol is applied to at least one pervious support and the suspension is solidified on and in the support material by heating at least once to a temperature of from 100 to 800°C for from one second to ten minutes, **characterized in that** the support is unwound from a roll, at a speed of from 1 m/h to 1 m/s passes through at least one apparatus that brings the suspension onto and into the support and through at least one further apparatus that allows the solidification of the suspension on and in the support by heating, and the composite thus produced is wound up onto a second roll, and **in that** a metal compound which is to be reduced and is selected from the nitrates, halides, hydroxides, cyanides, thiocyanides and alkoxides of the metals Pt, Rh, Ru, Ir, Cu, Ni, Co and Pd is added to the suspension during the production of the composite and the metal compound in and/or on the composite is reduced, and that the inorganic component which is suspended in the sol has a particle size of from 1 to 10 000 nm and the composite has a thickness of from 5 to 150 pm.

2. A process according to claim 1, **characterized in that** the suspension is brought onto and into at least one support by printing on, pressing on, pressing in, rolling on, knifecoating on, spreading on, dipping, spraying or pouring on.

3. A process according to either of claims 1 and 2, **characterized in that** the sols are obtained by hydrolysing at least one metal compound, at least one semimetal compound or at least one mixed metal compound with a liquid, gas or solid.

4. A process according to claim 3, **characterized in that** water, steam, ice, alcohol or an acid or a combination of these compounds is used as liquid, gas or solid for hydrolysing the metal compound.

5. A process according to either of claims 3 and 4, **characterized in that** the compound to be hydrolysed is introduced into alcohol or an acid or a combination of these liquids before the hydrolysis.

6. A process according to at least one of claims 1 to 5, **characterized in that** the hydrolysis of the compounds to be hydrolysed is carried out with at least half the molar ratio of water, based on the hydrolysable group of the hydrolysable compound.

7. A process according to at least one of claims 1 to 6, **characterized in that** the hydrolysed compound is treated with at least one organic or inorganic acid.

8. A process according to claim 7, **characterized in that** the organic or inorganic acid has a concentration of from 10 to 60%.

9. A process according to at least one of claims 7 and 8, **characterized in that** the hydrolysed compound is treated with at least one mineral acid selected from nitric acid, sulphuric acid, perchloric acid and hydrochloric acid or a combination of these acids.

10. A process according to at least one of claims 1 to 9, **characterized in that** the mass fraction of the suspended components corresponds to from 0.1 to 500 times that of the hydrolysed compound used.

11. A process according to at least one of claims 1 to 10, **characterized in that** the heating takes place by means of heated air, hot air, infrared radiation, microwave radiation or electrically generated heat.

12. A process according to at least one of claims 1 to 11, **characterized in that** the heating takes place with utilization of the support material in the form of electrical resistance heating.

13. A process according to at least one of claims 1 to 12, **characterized in that** the suspension is solidified by bringing the suspension onto and into a preheated support.

14. A process according to at least one of claims 1 to 13, **characterized in that** the metal salt present in the composite is reduced to the metal by treating the composite with a reducing agent.

15. A process according to claim 14, **characterized in that** a borohydride is used as reducing agent.

## Revendications

1. Procédé pour la fabrication d'un matériau composite perméable aux substances, catalytiquement actif, à base d'au moins un substrat perméable aux substances, qui est un matériau choisi parmi les métaux, les alliages, les céramiques et les matériaux composites, qui présente au moins sur une face du substrat et au sein du substrat, au moins un composant inorganique, qui présente essentiellement au moins un composé d'au moins un des éléments Ti, Zr, Al, Ce ou Si avec de l'oxygène, un composant catalytiquement actif présentant un métal, choisi parmi Pt, Rh, Ru, Ir, Cu, Ni, R, Co ou Pd, et qui est obtenu par un composant inorganique présentant par l'application d'une suspension qui présente au moins un composant inorganique présentant un composé d'au moins un des éléments Ti, Zr, Al, Ce ou Si avec de l'oxygène et une solution, une suspension étant au moins appliquée sur un substrat perméable à la substance, qui présente au moins un composant inorganique à partir d'au moins un composé d'au moins un des éléments Ti, Zr, Al, Ce ou Si avec l'oxygène suspendu dans une solution et dont la suspension est au moins solidifiée sur et dans le matériau de substrat par chauffage au moins unique entre 100 et 800°C durant 1 seconde à 10 minutes,
**caractérisé en ce que**
le substrat est déroulé par un rouleau, à une vitesse de 1 m/h à 1 m/s par au moins un appareil, qui applique la suspension sur et dans le substrat et traverse au moins un autre appareil, qui permet à la suspension de se solidifier par chauffage dans et sur le substrat et le matériau composite ainsi fabriqué est enroulé sur un second rouleau, et un composé métallique à réduire choisi parmi les nitrates, les halogénures, les hydroxydes, les cyanures, les thiocyanures ou les alcoolates des métaux Pt, Rh, Ru, Ir, Cu, Ni, R, Co, ou Pd durant la fabrication du matériau composite est obtenu par suspension et il est réduit dans et/ou sur le matériau composite du composé métallique existant et la composante inorganique suspendue dans la solution présente une granulométrie de 1 à 10 000 nm du matériau composite d'une épaisseur de 5 à 150 µm.

2. Procédé selon la revendication 1,
**caractérisé en ce que**
la suspension est appliquée sur et au moins dans un substrat par application, compression, injection, application au rouleau, application à la raclette, application au pinceau, immersion, pulvérisation ou coulage.

3. Procédé selon au moins l'une quelconque des revendications 1 à 2,
**caractérisé en ce que**
la solution est obtenue par hydrolysation au moins d'un composé métallique, d'au moins un composé de demi-métal ou d'au moins un composé de métal mixte avec un fluide, un gaz ou un solide.

4. Procédé selon la revendication 3,
**caractérisé en ce que**
comme liquide, gaz ou solide pour l'hydrolyse du composé métallique, l'eau, la vapeur d'eau, la glace, l'alcool ou ces composés dans un acide ou en combinaison sont utilisés.

5. Procédé selon au moins l'une quelconque des revendications 3 ou 4,
**caractérisé en ce que**
le composé à hydrolyser est placé avant l'hydrolyse dans un alcool ou dans un acide ou dans une combinaison de ces fluides.

6. Procédé selon au moins l'une quelconque des revendications 1 à 5,
**caractérisé en ce que**
l'hydrolyse des composés à hydrolyser est réalisée avec au moins le demi-rapport molaire d'eau par rapport au groupe hydrolysable du composé hydrolysable.

7. Procédé selon au moins l'une quelconque des revendications 1 à 6,
**caractérisé en ce que**
le composé hydrolysé est traité avec au moins un acide organique ou inorganique.

8. Procédé selon la revendication 7,
**caractérisé en ce que**
l'acide organique ou inorganique présente une concentration de 10 à 60%.

9. Procédé selon au moins l'une quelconque des revendications 7 ou 8,
**caractérisé en ce que**
le composé hydrolysé est traité avec au moins un acide minéral, choisi parmi l'acide azotique, l'acide sulfurique, l'acide perchlorique, et l'acide muriatique ou une combinaison de ces acides.

10. Procédé selon au moins l'une quelconque des revendications 1 à 9,
**caractérisé en ce que**
la proportion massique des composants suspendus correspond de 0,1 à 500 fois à celle du composé hydrolysé utilisé.

11. Procédé selon au moins l'une quelconque des revendications 1 à 10,
**caractérisé en ce que**
le chauffage est réalisé au moyen d'air chauffé, d'air chaud, d'irradiation infrarouge, de rayonnement micro-ondes, ou d'un chauffage électrique.

12. Procédé selon au moins l'une quelconque des revendications 1 à 11,
**caractérisé en ce que**
le chauffage utilisé pendant l'utilisation du matériau substrat est un chauffage électrique à résistance.

13. Procédé selon au moins l'une quelconque des revendications 1 à 12,
**caractérisé en ce que**
la solidification de la suspension est atteinte, du fait que la suspension est appliquée sur ou dans un substrat préchauffé.

14. Procédé selon au moins l'une quelconque des revendications 1 à 13,
**caractérisé en ce que**
le sel métallique, présent dans le matériau composite, est réduit en un métal par le traitement du matériau composite avec une solution de réduction.

15. Procédé selon la revendication 14,
**caractérisé en ce qu'**
un bromhydrate est utilisé comme solution de réduction.
